# EUROPEAN PATENT SPECIFICATION

(11) **EP 2 161 989 B1**
(45) Date of publication and mention of the grant of the patent: **17.12.2014**
(21) Application number: 08756960.4
(22) Date of filing: 20.06.2008
(51) Int. Cl.: A01K 61/00, A01K 63/00, A01K 63/02

(54) **AQUACULTURE BASKET AND ATTACHMENT SYSTEM**
AQUAKULTURKORB UND BEFESTIGUNGSSYSTEM
NASSE D'AQUACULTURE ET SYSTÈME DE FIXATION

(30) Priority: 22.06.2007 AU 2007903380 P
(43) Date of publication of application: 17.03.2010
(73) Proprietor: Hexcyl Systems Pty Ltd, Ceduna, South Australia 5690 (AU)
(72) Inventor: PENDERGRAST, Ian, Howard, South Australia 5162 (AU); SEIDL, Garry, Bruno, South Australia 5690 (AU); SEIDL, Andre, Josef, South Australia 5690 (AU); HUXTABLE, Paul, Stewart, South Australia 5069 (AU)
(74) Representative: Hübner, Gerd
(86) International application number: PCT/AU2008/000880
(87) International publication number: WO 2009/000018

(56) References cited:
- EP-A2- 1 266 567
- WO-A1-02/01947
- FR-A1- 2 715 025
- FR-A1- 2 883 700
- FR-A1- 2 893 228
- JP-A- 03 240 425
- US-A- 3 702 599
- US-A- 3 741 159
- US-A- 4 377 987

## Description

### Field of the Invention

The present invention relates to an improved aquaculture basket. The invention also relates to an attachment system for attaching a member, such as a clip, to an aquaculture basket. Such device is known from EP 1266 567 A.

### Background of the Invention

Many different forms of baskets are used in the aquaculture industry to form an enclosure for housing aquaculture products. For example, baskets used by oyster farmers include hand made mesh baskets, extruded mesh baskets that hinge open for access to the oysters and injection moulded mesh baskets with a hinged door. These different baskets are arranged to be secured to a longitudinal support or line that positions the basket in the water. Different securing mechanisms are used to secure the baskets to the longitudinal support or line (hereinafter "support line"). For example, some of the baskets have a clip or clips that are hooked over the longitudinal line, whereas others are actually threaded onto the longitudinal support.

The baskets may be connected to a single support line so that adjacent baskets are positioned end adjacent end. This is known as an "in-line" arrangement. Alternatively, each basket may be connected to two adjacent support lines so that adjacent baskets are positioned side by side. This is known as a "tangential line" arrangement.

In use, the baskets are repeatedly removed from the support lines so that the integrity of the enclosure formed by the basket can be checked, their contents inspected and harvested.

The support lines are periodically raised and lowered to adjust the positioning of the basket in the water. This enables the grower to have some control over the hygiene and growth of the oysters in the basket because the depth of the basket in the water has a direct relationship with the amount of wind and wave action on the basket and also the amount of marine fouling.

There are quite a number of different problems with current baskets of the type used in the aquaculture industry. For example, the mesh of the baskets tends to crack, the clips fail and the baskets become fouled with marine growth during use impairing water flow through the baskets.

Some of the baskets are quite difficult to remove and reattach to the support lines. It is desirable to make this process as easy as possible because of the very high number of baskets that are handled. For example, it is typical to have 3000-4000 baskets per hectare of aquaculture farm.

Although the removal and reattachment of the baskets needs to be easily performed, the connection of the basket to the support line must still be sufficiently strong to prevent accidental disconnection of the basket due to rough seas and bad weather.

Another problem with some of the current baskets is that the clips used to attach the basket to the longitudinal line are such that they allow the basket to move up and down in the water. This is disadvantageous because it encourages premature failure of the baskets and the clips.

Some of the clips have a tendency to rotate about the connection with the basket. This results in premature fatigue of the clip and in some instances the clip may fail causing the basket to disconnect from the support line, resulting in loss of both the basket and its contents.

It is also desirable for the baskets to be easily storable when being transported. Basket designs that enable "on end" storage are generally advantageous. The baskets should also be easy to assemble.

The present invention seeks to provide in one aspect an improved aquaculture basket that overcomes or at least alleviates some of the above mentioned problems.

The present invention also seeks to provide in a second aspect an aquaculture basket attachment system.

The discussion of the background to the invention herein is included to explain the context of the invention. This is not to be taken as an admission that any of the material referred to was published, known or part of the common general knowledge as at the priority date of this application.

### Summary of the Invention

According to a first aspect of the present invention there is provided an aquaculture basket according to claim 14.

According to a second aspect of the present invention there is provided an aquaculture basket attachment system, said attachment system including a connection area integrally formed with or connectable to said basket and a connection member arranged for attachment to said connection area, said connection area including a plurality of connection parts arranged so that said connection member can be attached to said connection area in one or more alternative positions whereby said aquaculture basket can be attached to a support line or other part by means of the connection member, the connection parts include a plurality of fixed axles about which the connection member is arranged to be at least partially rotatable. The connection member has a lower end that includes at least one finger arranged for selective engagement to at least one of said plurality of axles.

The plurality of axles are preferably arranged so that at least one extends along an x-axis and at least one extends along a y-axis thus enabling the connection member to be connected to the clip connection area in two different orientations.

The plurality of axles and the fingers of the connection member are shaped so that when the connection member is attached to the clip connection area it can be moved between an operative position and an inoperative position. That movement is preferably a rotational movement about the axle or axles to which it is selectively engaged. To this end, the fingers of the connection member are arranged to be journalled about said axles.

In the operative position, the connection member is arranged so that the basket can be hung or suspended from a supporting line or other part. The connection member extends upwardly away from the object. In the inoperative position, the connection member is located so that a major portion thereof is substantially adjacent the basket.

In a particularly preferred form, the lower end of the connection member includes two fingers. Each finger being arranged for engagement with one of said plurality of axles. Each finger includes an engagement surface arranged to contact with the axle to which it is engaged. The engagement surface and axle are configured so that the connection member can be moved between the operative and inoperative positions. Furthermore, the connection member is held in either of these positions, until an overcoming force is applied to the member to move it out of either the operative or inoperative position.

In a preferred form, the axles are substantially square in cross-section so that they include four side parts. The engagement surfaces of the fingers each include three substantially planar surfaces that are arranged to engage with respective of said side parts so that there is a clear delineation between the operative and inoperative positions of the connection member as it is rotated about the axle.

### Description of the Drawings

Embodiments of the invention will now be described, by way of example only, with reference to the accompanying drawings in which:
Figure 1 is a perspective view of a basket in accordance with an embodiment of the invention. The attachment clips are shown in the operative position;
Figure 2 is a side view of the basket shown in Figure 1;
Figure 3 is an end view of the basket shown in Figure 1;
Figure 4 shows the basket of Figure 1 with the doors of the basket in an open position;
Figure 5 is a side view showing three baskets of the type shown in Figure 1 secured to a single support line in an "in line" arrangement;
Figure 6 is a side view showing four baskets of the type shown in Figure 1 secured to and across a pair of support lines in a "tangential line" arrangement;
Figure 7 is a view similar to Figure 1 but the attachment clips of the basket are shown in an inoperative position;
Figure 8A is a perspective view from above of a basket half of the basket shown in Figure 1;
Figure 8B is an enlarged view of the clip connection area (marked C) in Figure 8A;
Figure 8C is a cross-sectional view along line J-J in Figure 8B;
Figure 9 is a perspective view of the underside of the basket half shown in Figure 8A;
Figure 10 is a perspective view of two basket halves "nested" together for transport;
Figures 11A, 11B and 11C are respective top, underside and cross-sectional views of a door of the basket shown in Figure 1;
Figure 12 is a front view of one of the attachment clips of the basket shown in Figure 1;
Figure 13 is a close-up view of circled portion of the clip shown in Figure 12;
Figure 14 is a side view of the attachment clip shown in Figure 12;
Figure 15 is a perspective view of the attachment clip shown in Figure 12;
Figure 16 is a cross-sectional view showing the connection of the connection clip to the basket. The clip is shown in the operative position;
Figures 17A to 17C show the attachment clip in three different "in line" positions on the top basket half; and
Figures 18A to 18C show the attachment clip in three different "tangential line" positions on the top basket half.

### Detailed Description of the Preferred Embodiments

The following description makes reference to a basket for use in the aquaculture industry. The basket as described subsequently is an oyster basket. However, it must be appreciated that the present invention is not so limited.

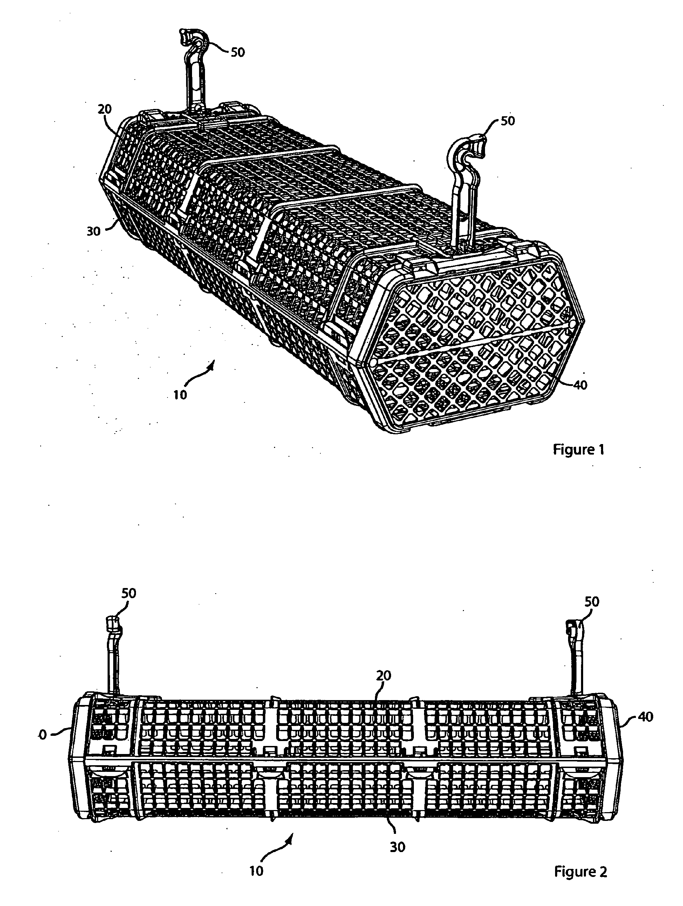

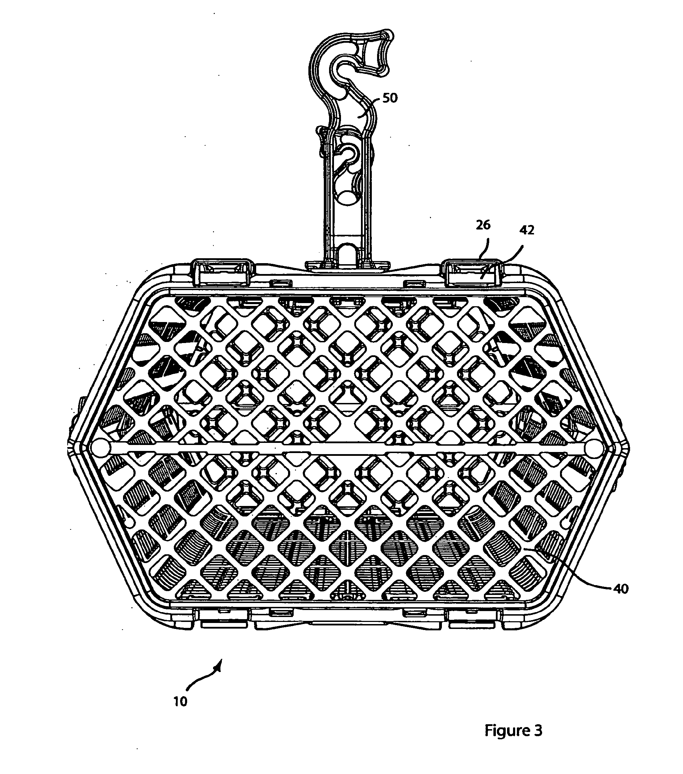

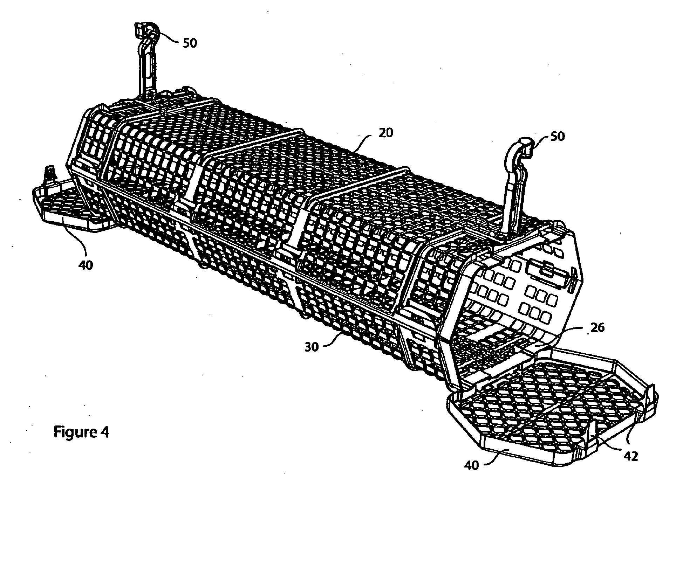

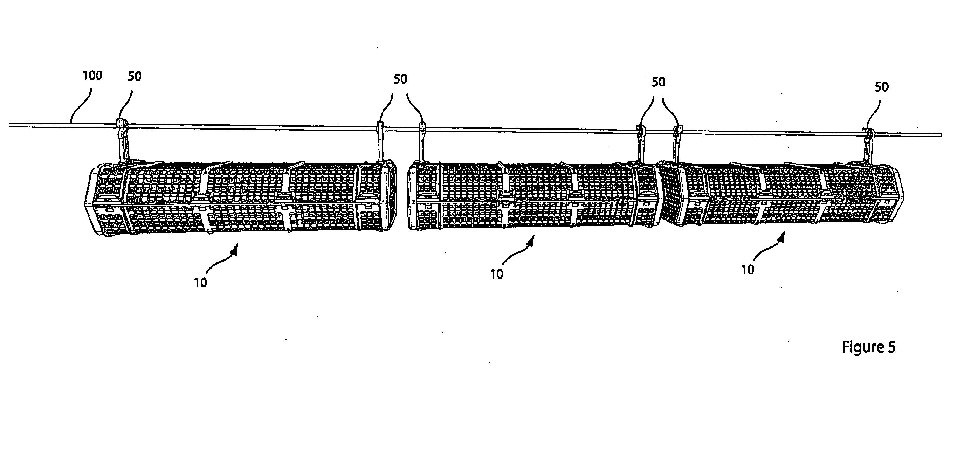

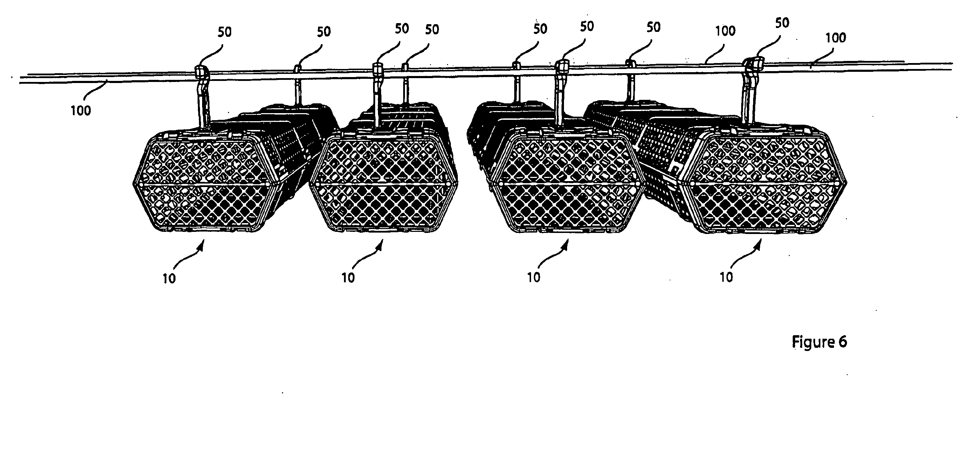

Figures 1 to 4 show an oyster basket 10 that includes a top basket part 20, a bottom basket part 30, first and second doors 40 and first and second connection members 50. The connection members 50 are formed, in accordance with this embodiment, as attachment clips 50 that enable the basket 10 to be suspended from a support line 100 (Figures 5 and 6).

All of the individual components of the basket 10 are made of plastic and are injected moulded. The plastic used is preferably a thermoplastic material such as high density polyethane or polypropylene. Such a plastic is U.V. stable, is durable and hence provides a long component operational life.

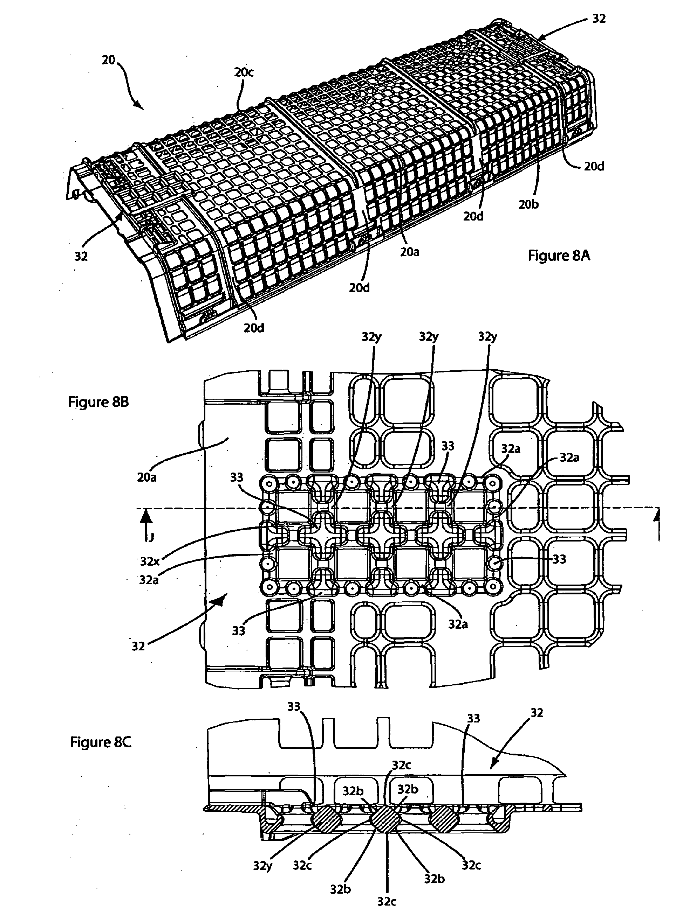

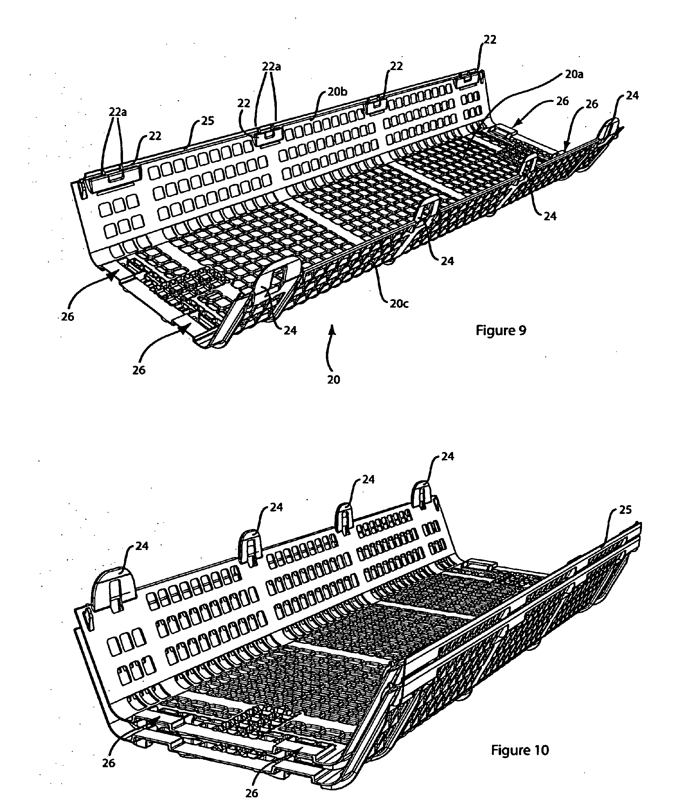

The top basket part 20 and the bottom basket part 30 of the basket 10 are interchangeable and as illustrated are identical. Hence, the top and bottom basket parts 20, 30 are actually respective top and bottom basket halves 20, 30. Figures 8 and 9 show such a basket half 20, 30.

The first and second doors 40 of the basket 10 are also identical and hence interchangeable. This reduces the overall production cost of the basket 10 because only one die is required to mould the top and bottom basket halves 20, 30 and only one die is require to mould the first and second doors 40. Assembly and repair of the basket 10 is also made simpler by virtue of the number of identical and hence interchangeable parts.

The identical nature of the top and bottom basket halves 20, 30 also means that they can be readily stacked or nested one inside the other for storage and transport. Nesting of the two halves 20, 30 of the basket 10 is illustrated in Figure 10. It will be appreciated that a large number of such basket halves 20, 30 can be nested in this manner.

The basket 10 forms an enclosure for housing aquaculture product. It is important that the enclosure formed by the basket 10 does not include any openings that would enable oysters to accidentally fall out of the basket 10.

Each basket half 20, 30 is substantially U-shaped in cross-section and has a generally planar portion 20a and integral first and second side portions 20b, 20c. The planar portion 20a and first and second side portions 20b, 20c are formed as a mesh and have four bands 20d extending across them. These bands 20d strengthen the basket half 20, 30. If positioned appropriately, these bands 20d can also be used as a guide as to the proper amount of stock that should be loaded into the assembled basket 10. For example, if the basket 10 is positioned so that it stands on one of the doors 40, product (e.g. oysters) can be loaded into the basket 10, via the other door 40, until it reaches a particular one of the bands 20d. At that point, no more oysters should be loaded into the basket 10 if optimum growing conditions are to be provided to the oysters within the basket 10.

The mesh of the basket halves 20, 30 may vary in configuration. However, the shape and orientation of the mesh as illustrated in the Figures has been found to be advantageous for manufacturing reasons and to also help reduce marine fouling.

The first side portion 20b of each basket half 20 has four apertures 22 longitudinally spaced along its edge. The second side portion 20c has four tongues 24 longitudinally spaced along its edge. The apertures 22 and tongues 24 are complimentary so that the apertures 22 and tongues 24 of the top basket half 20 can be engaged within the respective tongues 24 and apertures 22 of the bottom basket half 30. The tongues 24 and apertures 22 of the basket halves form the engagement means that engage and hold the top and bottom basket halves 20, 30 together.

The apertures 22 may be formed with guide ribs 22a to help guide the complimentary tongue 24 into the aperture 22.

A detent arrangement is provided between the complimentary tongues 24 and apertures 22 so that they "clip" or "snap" together and can only be separated by deliberate flexure of the tongues 24.

Although four apertures 22 and tongues 24 are included on each of the basket halves 20, 30 more or less complimentary apertures and tongues may be provided depending on the size of the basket 10. If the basket 10 is very long more complimentary apertures and tongues may be required to prevent an opening forming between the top basket half 20 and bottom basket half 30 in the event that there is substantial flexure of the assembled basket 10.

As shown in Figure 9, each top and bottom basket half 20, 30 includes an elongate rib 25 extending along the basket half 20, 30 on the same side as the apertures 22. This rib 25 overlaps with the edge of the adjacent basket half 20, 30 so as to eliminate the possibility of an opening forming between the top and bottom basket halves 20, 30.

Each basket half 20, 30 also has two hinge/catch members 26 at each longitudinal end. The hinge/catch members 26 are dual function in that when the basket half is used as a top basket half 20, they act as a catch point for securing a catch 42 of the door 40. When the basket half is used as a bottom basket half 30, the hinge/catch members 26 act as the hinge pin for a hinge member 44 of the door 40.

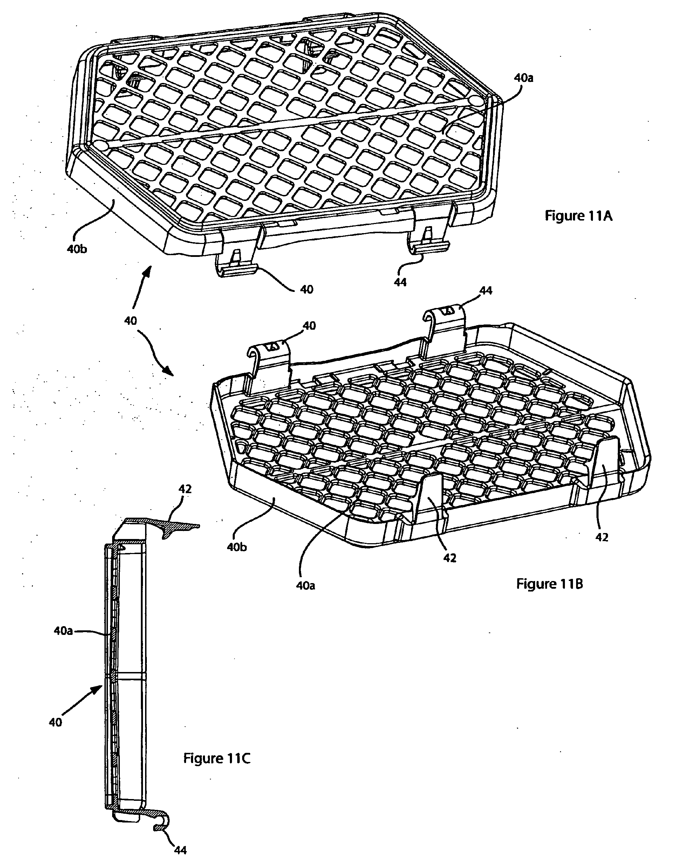

As best shown in Figures 11A and 11B, the door 40 has a planar mesh portion 40a and an outer frame 40b. The outer frame 40b provides strength to the door 40 and when the door 40 is connected to the basket halves 20, 30 improves the structural strength of the basket 10. The catch 42 and hinge member 44 extend outwardly from an inner side of the outer frame 40b of the door 40. Accordingly, when the door 40 is placed on a surface so that the catch 42 and hinge member 44 facing upwardly (Figure 11 B), the outer side of the door 40 sits flat on the surface. This advantageous as it allows the basket 40 to be stored or transported on "end" (i.e. standing on one of the doors 40).

Figures 8A, 8B and 8C best illustrate a clip connection area 32 of the basket half 20, 30. As shown in Figure 8A, there are two such clip connection areas 32 on each basket half 20, 30. Each clip connection area 32 is configured to enable connection with a respective one of the attachment clips 50. As will be explained in more detail below, each attachment clip 50 includes a pair of fingers 54. These fingers 54 are arranged to engage with the clip connection area 32.

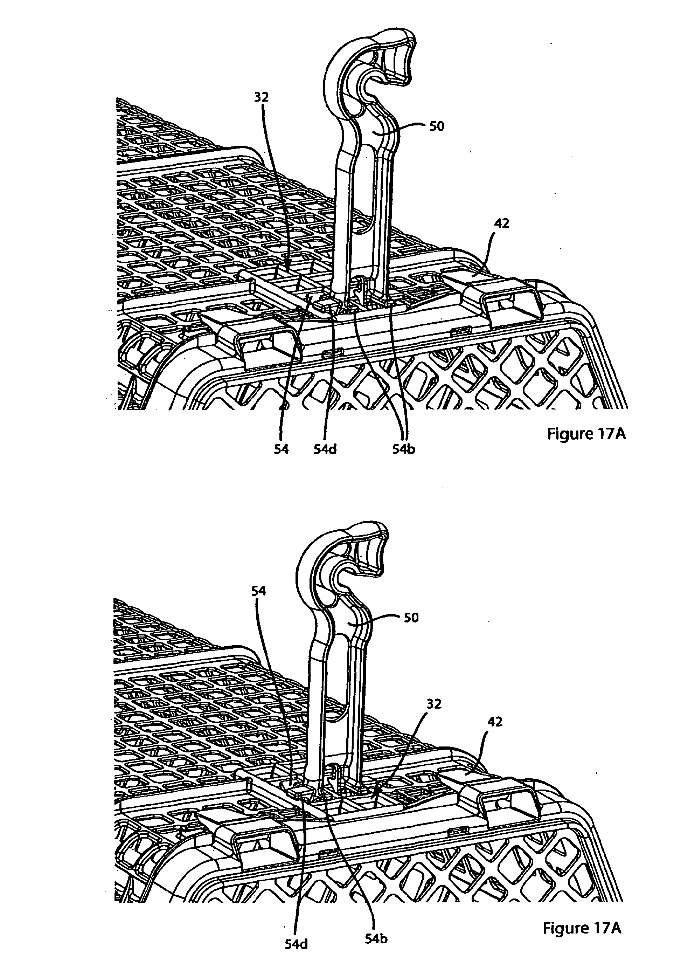

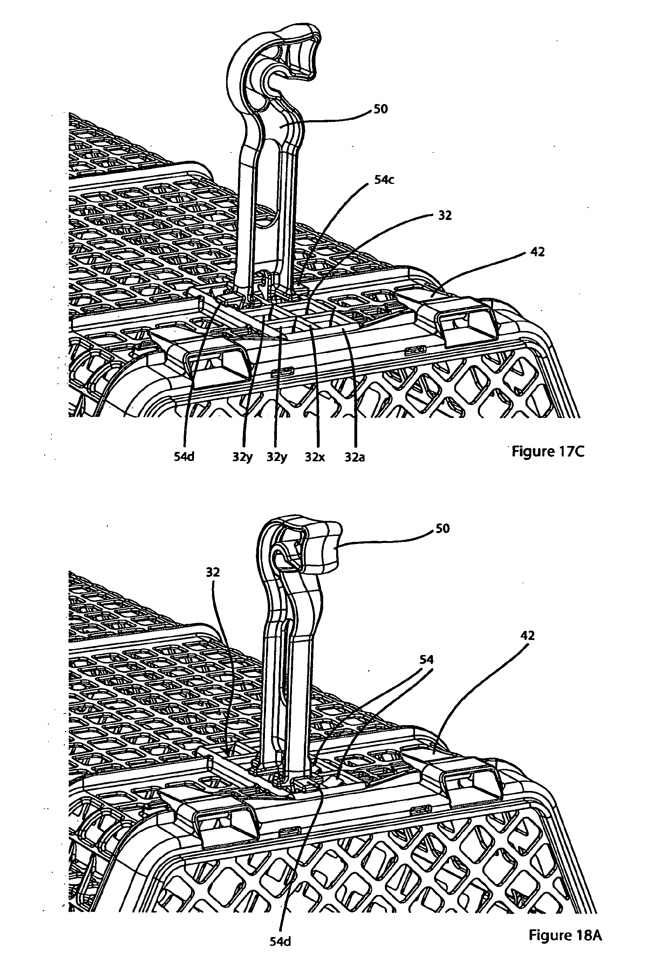

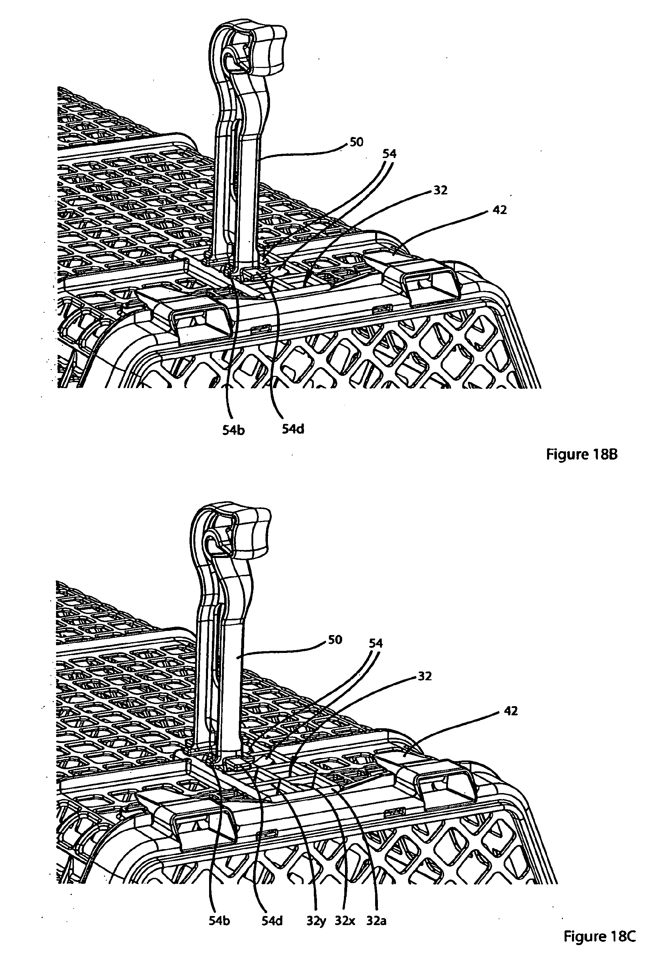

Each clip connection area 32 is formed by an array of connection members hereinafter referred to as connection axles 32x, 32y and four boundary members 32a. The single connection axle 32x extends in a first direction (e.g. along an x-axis) and three connection axles 32y extend along a second direction at 90° to the first directions (e.g. along a y-axis). The array of connection axles 32x, 32y and boundary members 32a enable the attachment clip 50 to be positioned in two different arrangements (i.e. "in-line" and "tangential line" (see Figures 5 and 6)). Furthermore, the illustrated connection area 32 enables the attachment clip 50 to be connected in three different "in-line" positions and three different "tangential line" positions. The three different "in-line" positions are shown in Figures 17A to 17C and the three different "tangential line" positions are shown in Figures 18A to 18C.

As shown most clearly in Figure 8B, there is a single axle 32x that is intersected by three axles 32y. An attachment clip 50 can be connected to the single axle 32x in three different operative positions (establishing the three different "tangential line" positions).

The attachment clip 50 can also be connected to each of the three axles 32y (establishing the four different operative "in-line" positions).

It will thus be appreciated that connection of the attachment clip 50 to the clip connection area 32 can occur in a variety of different positions and two different orientations (i.e. x and y axis). Thus, if any of the connection axles 32x, 32y are damaged, the attachment clip 50 can still be attached to the clip connection area 32 in numerous other positions.

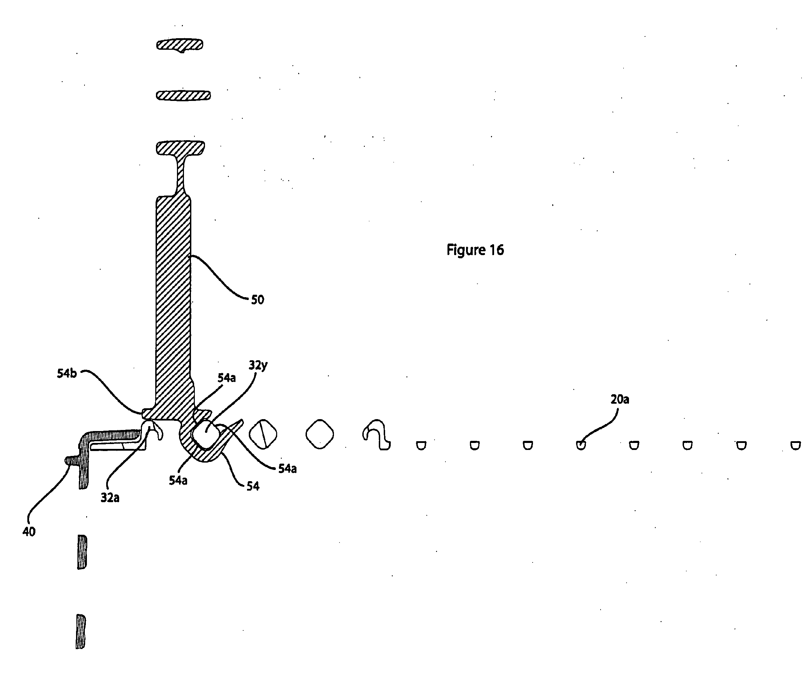

Each connection axle 32x, 32y is substantially square in cross-section so that it includes four planar side parts 32b (Figures 8C and 16). Each of the adjacent side parts 32b are joined by a rounded corner portion 32c. The function of the planar side parts 32b will be explained below.

Each of the axles 32x, 32y and boundary members 32a includes a number of cut-outs 33. These cut-outs 33 have been included to reduce the amount of material in the clip connection area 32 and hence reduce material costs.

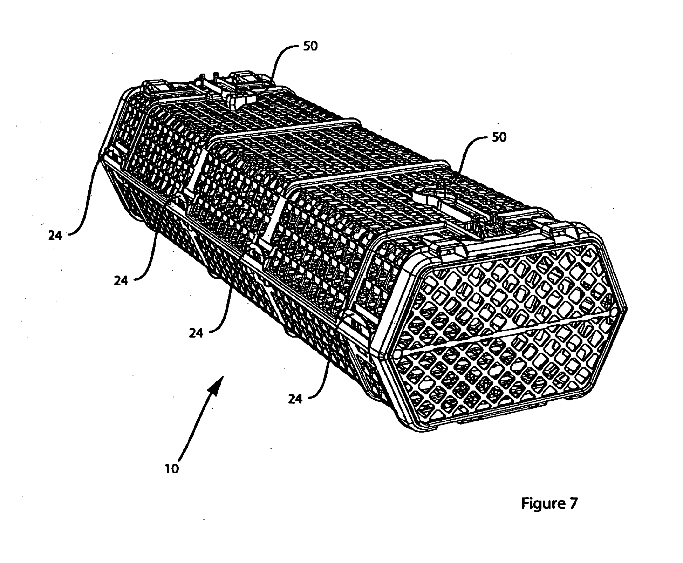

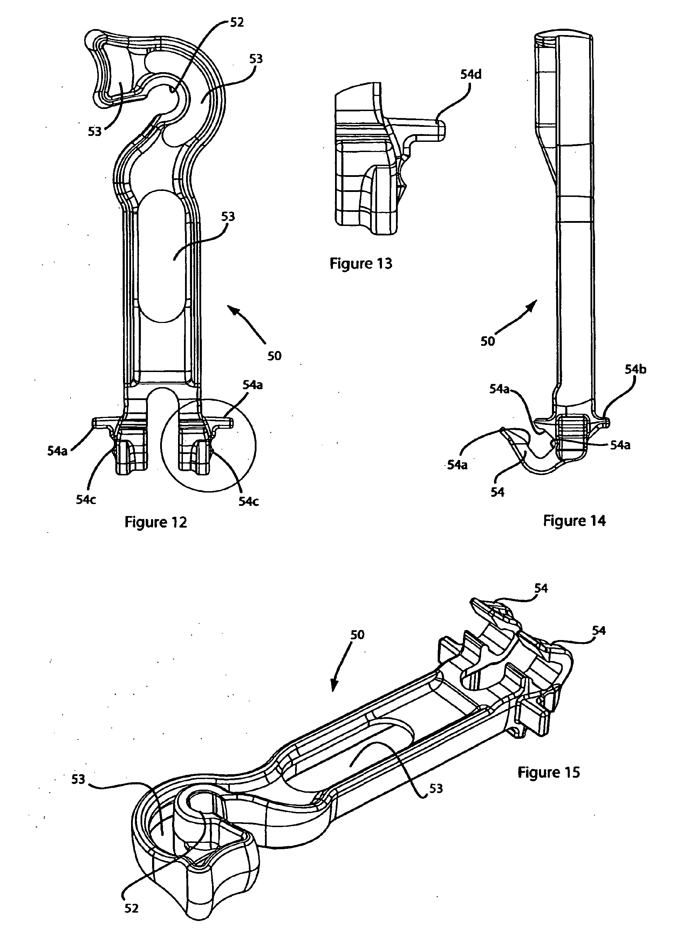

Figures 12 to 15 illustrate the attachment clip 50. The attachment clip 50 has an upper end in the form of a hook 52 and a lower end including the pair of fingers 54 mentioned above. When the basket 10 is ready for use, the attachment clip 50 is located in an upright operative position (Figures 1 and 2). When the basket is not in use, the attachment clips 50 can be moved to a lowered inoperative or storage position (Figure 7). In this position each attachment clip 50 lies against the top basket half 20 so that a major portion of the clip 50 is adjacent to or in contact with the basket half 20. Each attachment clip 50 is moved between the operative an inoperative position by rotating it about the axle 32x, 32y or boundary member 32a to which it is connected.

When the basket 10 is in use in the water, the hook 52 of each attachment clip 50 is hooked over a longitudinal support line 100. The line 100 is positioned within a substantially U-shaped portion of the hook 52.

The hook 52 and the pair of fingers 54 are positioned so that the line 100 and the axles 32x, 32y to which the fingers 54 are connected are at 90° to one another. This means that the action of hooking the hook 52 of the attachment clip 50 onto a supporting line 100 (and any resultant applied force) will not serve to dislodge or disengage the fingers 54 of the attachment clip 50 from the axles 32x, 32y of the clip connection area 32.

The fingers 54 of each attachment clip 50 are arranged so that they can be connected to the clip connection area 32 of the basket 10. To this end, each finger 54 includes an engagement surface which is substantially U-shaped (Figure 14). The engagement surface includes three substantially planar portions 54a.

When the attachment clip 50 is attached to the clip connection area 32 the planar portions 54a of the engagement surface are configured to be located about one of the connection axles 32x, 32y. Figure 16 best illustrates the connection between one of the fingers 54 of the attachment clip 50 and one of the connection axles 32y. In this Figure, the attachment clip 50 is shown in the upright operative position. The planar portions 54a of the attachment clip 50 are located substantially parallel to the respective side parts of the axle 32y. The cross-sectional shape of the axle 32x, 32y and the planar portions 54a of the engagement surface of the fingers 54 are arranged so that the attachment clip 50 can be rotated abut the axles 32x, 32y so as to be movable between the operative and inoperative position. Furthermore, they are arranged so that there is a clear delineation between the operative and inoperative positions of the attachment clip 50. This delineation is apparent because a bias must be overcome to move the clip 50 out of each of these positions. This bias is established by the relative dimensions of the axles 32x, 32y and the planar portions 54a of the engagement surface of the fingers 54.

As best shown in Figure 14, the attachment clip 50 includes a rear protrusion 54b extending from each of the fingers 54. When the attachment clip 50 is attached to the basket 10 and in the operative position, the protrusions 54b of the fingers 54 contact against either an adjacent axle 32x, 32y or one of the boundary members 32a. This contact prevents continued rotation of the attachment clip 50 about the axle 32x, 32y and thus helps to retain the attachment clip 50 in an upright operative position.

The fingers 54 of the attachment clip 50 and the spacing between the array of axles 32x, 32y and boundary members 32a is such that there is a relatively tight fit therebetween when the attachment clip 50 is connected to the clip connection area 32. The fit is such as to allow rotation of the attachment clip 50 between the operative and inoperative positions but is such as to help retain the attachment clip 50, by virtue of a frictional engagement, in either position once located therein. To this end, the outer sides of the fingers 54 may include side protrusions 54c (Figures 12 and 13) that are arranged for frictional engagement with the adjacent axles 32x, 32y or boundary members 32a. The fingers 54 also include side protrusions 54d. The side protrusions 54d contact against either an adjacent axle 32x, 32y or one of the boundary members 32a.

As shown in Figures 12 and 15, the attachment clip 50 is formed with a number of apertures 53. These apertures 53 serve to reduce the amount of material necessary to form the clip 50 and also enable passage of water there through.

In Figure 1 it will be seen that the attachment clips 50 of the basket 10 are facing in opposite directions. This is done so as to better secure the basket 10 on the support line 100 during use in the event that a strong sideways force was applied to the basket 10. Such a side ways force may dislodge one of the clips 50 from the line 100 but would not knock the second attachment clip 50 from the line 100. Hence the basket 10 would not be lost into the water.

The basket 10 offers numerous advantages over prior art arrangements. These advantages include:
1. The basket is made from a small number of components many of which have a dual role. For example, the top and bottom basket halves are identical and are hence interchangeable. The doors on each end are the same and are hence interchangeable. Both of the clips used on the basket are identical. Hence, manufacturing costs are reduced.
2. The components of the basket are easily assembled and disassembled. This is particularly important in reducing the initial assembly time of the basket and for any repair or replacement of components.
3. The components of the basket are compact and the basket halves can be nested for easy storage and transport.
4. The outer side of each door of the basket is flat enabling on end storage and transport of the basket.
5. Doors are located at either end of the basket providing easy access to the contents of the basket.
6. The catch and hinge member of each door are shaped so as to deter marine fouling.
7. The attachment clips are easily attached to the supporting line and can be readily removed.
8. The attachment clips are held firmly in the operative position and thus do not inadvertently fold and thus the basket is always held in the desired operative position below the supporting line.
9. The attachment clips are arranged to be connected to a clip connection area on the top basket half. The clip connection area is such that the clip can be attached at a number of different positions and in two different orientations. This makes the basket more flexible in so far that it can be attached either "in line" or "tangentially". Furthermore, if there is damage to a part of the clip connection area it will normally be possible to connect the attachment clip to an undamaged part of the clip connection area enabling continued use of the basket.
10. If the clip connection area on the top basket half becomes severely damaged, the basket can be turned over and the attachment clips can be secured to what was, prior to inversion, the bottom basket half.
11. The shape of the hook of the attachment clip is such that it tends to "grip" the supporting line thereby preventing slippage of the basket along a support line. This may also prevent breakage of the support line as continual rubbing of a basket along a line may cause premature failure of the support line.
12. The attachment clips can be lowered and held securely in an inoperative storage position. In that position the clips are flat against the top basket half. Thus the clips do not get entangled when handled and enable the baskets to be easily stacked for storage and transport.
13. The basket halves each have a generally planar portion on which oysters can sit. The oysters are hence able to readily move over that planar portion due to wave or wind action. This improves the shape and hygiene of the oyster shells and reduces the tendency for the new shell growth to foul the basket.
14. The inside of the basket is free of inward projections thereby again minimising an opportunity for fouling. It also means that the basket can be readily loaded and emptied without stock catching on protrusions.
15. The basket has guides included in it to indicate, when loading a basket, an appropriate stock level.
16. The material from which the basket is made and the design of the various components of the basket is such to provide maximum operational life.

In accordance with the previously described embodiment, the clip connection area 32 of the basket 10 is integrally formed as part of each of the top and bottom basket halves 20, 30. However, it is envisaged that in alternative embodiments of the invention, the connection area 32 need not be integrally formed with the basket halves 20, 30. The connection area 32 may be otherwise arranged to be connectable to the respective basket halves 20, 30.

The above description refers to a clip connection area 32 incorporated in an oyster basket half 20, 30 for use with an attachment clip 50. The clip connection area 32 is arranged to enable connection with a connection member in the form of an attachment clip 50. It should however be appreciated that a clip connection area could be incorporated into a variety of different objects and that the connection member could adopt other forms. For example, the attachment clip 50 could be replaced with an attachment member (not shown) that has a first end arranged for connection to a clip connection area on an object. For example, the attachment member could be a display post and the object may be a display platform. The attachment member could have a first end arranged for connection to the clip connection area of the display platform and could be moved between an operative position wherein the display post displayed a sign and an inoperative position wherein the sign is not visible for display. Thus, it should be appreciated that the attachment system of the present invention is not limited to use in oyster baskets or to use in the aquaculture industry.

The embodiments have been described by way of example only and modifications within the spirit and scope of the invention are envisaged.

## Claims

1. An aquaculture basket attachment system, said attachment system including a connection area integrally formed with or connectable to an aquaculture basket and a connection member including an upper end and a lower end, the lower end arranged for attachment to said connection area of said aquaculture basket, said connection area including a plurality of connection parts each defining alternative connection positions arranged so that said lower end of said connection member can be selectively attached at one of said connection positions and said upper end of the connection member can be attached to a support line or other part, **characterised in** the connection parts including a plurality of axles and said lower end of the connection member including an engagement surface arranged to engage with at least one of said axles so that the connection member is held in an operative position by said engagement until an overcoming force is applied to the connection member to move it out of the operative position, said operative position being the position adopted by the connection member when the connection member is attached to the support line or other part.

2. An aquaculture basket attachment system according to claim 1 wherein the lower end of said connection member includes at least one lower finger arranged for selective engagement to at least one of said plurality of axles.

3. An aquaculture basket attachment system according to claim 1 or claim 2 wherein said engagement surface is substantially U-shaped.

4. An aquaculture basket attachment system according to any one of the preceding claims wherein said connection axles each include four planar side portions.

5. An aquaculture basket attachment system according to any one of claims 2 to 4 wherein the engagement surface of the lower finger includes three substantially planar portions, said planar portions extending in use substantially parallel to respective side portions of the connection axle to which the connection member is connected.

6. An aquaculture basket attachment system according to any one of claims 2 to 5 wherein the engagement surface is configured to enable the lower finger to at least partially rotate about the selected connection axle.

7. An aquaculture basket attachment system according to any one of claims 2 to 6 wherein the plurality of connection axles are arranged so that at least one extends along an x-axis and at least one extends along a y-axis whereby the lower finger can be attached to the clip connection area in two different orientations.

8. An aquaculture basket attachment system according to any one of claims 1 to 7 wherein the plurality of connection axles and the lower end of the connection member are shaped so that the connection member is movable between said operative position in which the upper end is positioned upwardly of and away from the basket enabling the connection member to be connected to the support line or other part and an inoperative position wherein the upper end is positioned adjacent to or in contact with the basket.

9. An aquaculture basket attachment system according to claim 8 wherein there is a frictional engagement between the lower end and the selected connection axle so that a bias must be overcome in order to move the connection member between the operative and inoperative positions.

10. An aquaculture basket attachment system according to any one of claims 1 to 9 wherein the lower end includes two lower fingers.

11. An aquaculture basket attachment system according to any one of claims 1 to 10 wherein the upper end includes an upper hook shaped to grip the support line or other part so as to prevent slippage of the upper hook along the support line or other part.

12. An aquaculture basket attachment system according to any one of claims 1 to 11 wherein the connection area is located on a central axis of an upper part of the basket.

13. An aquaculture basket attachment system according to any one of claims 1 to 12 including two connection areas and two connection members arranged to enable the basket to be connected along a single support line or between adjacent support lines.

14. An aquaculture basket including an aquaculture basket attachment system according to any one of claims 1 to 13.

## Patentansprüche

1. Ein Aquakulturkorb-Befestigungssystem, wobei dieses Befestigungssystem einen Verbindungsbereich, der einstückig mit einem Aquakulturkorb ausgebildet oder hiermit verbindbar ist, sowie ein Verbindungselement umfassend ein oberes Ende sowie ein unteres Ende umfasst, wobei das untere Ende so angeordnet ist, dass es an dem Verbindungsbereich des Aquakulturkorbes befestigt werden kann, wobei der Verbindungsbereich eine Vielzahl von Verbindungsteilen umfasst, die jeweils alternative Verbindungspositionen definieren, die so angeordnet sind, dass das untere Ende des Verbindungselements wahlweise an einer der Verbindungspositionen befestigt und das obere Ende des Verbindungselements mit einer Haltestange oder einem anderen Teil verbunden werden kann, **dadurch gekennzeichnet, dass** die Verbindungsteile eine Vielzahl von Achsen umfassen und das untere Ende des Verbindungselements eine Eingriffsfläche umfasst, die so angeordnet ist, dass sie mit zumindest einer der Achsen so in Eingriff steht, dass das Verbindungselement durch den Eingriff in einer wirksamen Position gehalten wird, bis eine Überwindungskraft auf das Verbindungselement ausgeübt wird, um dieses aus der wirksamen Position weg zu bewegen, wobei die wirksame Position die Position ist, die von dem Verbindungselement eingenommen wird, wenn das Verbindungselement mit der Haltestange oder einem anderen Teil verbunden ist.

2. Ein Aquakulturkorb-Befestigungssystem gemäß Anspruch 1, wobei das untere Ende des Verbindungselements zumindest einen unteren Finger umfasst, der zum wahlweisen Eingriff mit zumindest einer der Vielzahl von Achsen angeordnet ist.

3. Ein Aquakulturkorb-Befestigungssystem gemäß Anspruch 1 oder Anspruch 2, wobei die Eingriffsfläche im Wesentlichen U-förmig ist.

4. Ein Aquakulturkorb-Befestigungssystem gemäß einem der vorangehenden Ansprüche, wobei de Verbindungsachsen jeweils vier ebene Seitenabschnitte umfassen.

5. Ein Aquakulturkorb-Befestigungssystem gemäß einem der Ansprüche 2 bis 4, wobei die Eingriffsfläche des unteren Fingers drei im Wesentlichen ebene Abschnitte umfasst, wobei sich die ebenen Abschnitte während der Anwendung im Wesentlichen parallel zu jeweiligen Seitenabschnitten der Verbindungsachse erstrecken, mit der das Verbindungselement verbunden ist.

6. Ein Aquakulturkorb-Befestigungssystem gemäß einem der Ansprüche 2 bis 5, wobei die Eingriffsfläche so ausgebildet ist, dass sich der untere Finger zumindest teilweise um die ausgewählte Verbindungsachse drehen kann.

7. Ein Aquakulturkorb-Befestigungssystem gemäß einem der Ansprüche 2 bis 6, wobei die Vielzahl von Verbindungsachsen so angeordnet ist, dass sich zumindest eine entlang einer x-Achse erstreckt und sich zumindest eine entlang einer y-Achse erstreckt, wodurch der untere Finger in zwei unterschiedlichen Ausrichtungen mit dem Clip-Verbindungsbereich verbunden werden kann.

8. Ein Aquakulturkorb-Befestigungssystem gemäß einem der Ansprüche 1 bis 7, wobei die Vielzahl von Verbindungsachsen und das untere Ende des Verbindungselements so geformt sind, dass das Verbindungselement zwischen der wirksamen Position, in der das obere Ende so positioniert ist, dass es sich nach oben von dem Korb weg erstreckt, so dass das Verbindungselement mit der Haltestange oder einem anderen Teil verbunden werden kann, und einer unwirksamen Position, in der das obere Ende so positioniert ist, dass es benachbart zu dem Korb angeordnet ist oder an diesem anliegt, beweglich ist.

9. Ein Aquakulturkorb-Befestigungssystem gemäß Anspruch 8, wobei zwischen dem unteren Ende und der ausgewählten Verbindungsachse ein Reibschluss vorliegt, so dass eine Vorspannung überwunden werden muss, um das Verbindungselement zwischen der wirksamen und der unwirksamen Position zu bewegen.

10. Ein Aquakulturkorb-Befestigungssystem gemäß einem der Ansprüche 1 bis 9, wobei das untere Ende zwei untere Finger umfasst.

11. Ein Aquakulturkorb-Befestigungssystem gemäß einem der Ansprüche 1 bis 10, wobei das obere Ende einen oberen Haken umfasst, der so geformt ist, dass er die Haltestange oder ein anderes Teil ergreift, so dass ein Gleiten des oberen Hakens entlang der Haltestange oder einem anderen Teil verhindert ist.

12. Ein Aquakulturkorb-Befestigungssystem gemäß einem der Ansprüche 1 bis 11, wobei sich der Verbindungsbereich auf einer Mittelachse eines oberen Teils des Korbes befindet.

13. Ein Aquakulturkorb-Befestigungssytem gemäß einem der Ansprüche 1 bis 12, umfassend zwei Verbindungsbereiche und zwei Verbindungselemente, die so angeordnet sind, dass die Körbe entlang einer einzigen Haltestange oder zwischen benachbarten Haltestangen verbunden werden können.

14. Ein Aquakulturkorb umfassend ein Aquakulturkorb-Befestigungssystem gemäß einem der Ansprüche 1 bis 13.

## Revendications

1. Système de fixation de nasse d'aquaculture, ledit système de fixation comportant une zone de raccordement formée d'un seul tenant avec une nasse d'aquaculture ou pouvant être raccordée à celle-ci et un élément de raccordement comportant une extrémité supérieure et une extrémité inférieure, l'extrémité inférieure étant agencée pour une fixation à ladite zone de raccordement de ladite nasse d'aquaculture, ladite zone de raccordement comportant une pluralité de parties de raccordement définissant chacune des positions de raccordement alternatives agencées de sorte que ladite extrémité inférieure dudit élément de raccordement puisse être fixée de manière sélective au niveau de l'une desdites positions de raccordement et ladite extrémité supérieure de l'élément de raccordement puisse être fixée sur une ligne de support ou une autre partie, **caractérisé en ce que** les parties de raccordement comportant une pluralité d'essieux et ladite extrémité inférieure de l'élément de raccordement comportant une surface d'engagement agencée pour s'engager avec au moins l'un desdits essieux de sorte que l'élément de raccordement soit maintenu dans une position de fonctionnement par ledit engagement jusqu'à ce qu'une force supérieure soit appliquée à l'élément de raccordement pour le déplacer hors de la position de fonctionnement, ladite position de fonctionnement étant la position adoptée par l'élément de raccordement lorsque l'élément de raccordement est fixé à la ligne de support ou à une autre partie.

2. Système de fixation de nasse d'aquaculture selon la revendication 1, dans lequel l'extrémité inférieure dudit élément de raccordement comporte au moins un doigt inférieur agencé pour un engagement sélectif avec au moins l'un de ladite pluralité d'essieux.

3. Système de fixation de nasse d'aquaculture selon la revendication 1 ou 2, dans lequel ladite surface d'engagement est sensiblement en forme de U.

4. Système de fixation de nasse d'aquaculture selon l'une quelconque des revendications précédentes dans lequel lesdits d'essieux de raccordement comportent chacun quatre parties latérales planes.

5. Système de fixation de nasse d'aquaculture selon l'une quelconque des revendications 2 à 4, dans lequel la surface d'engagement du doigt inférieur comporte trois parties sensiblement planes, lesdites parties planes s'étendant lors de l'utilisation de manière sensiblement parallèle à des parties latérales respectives de l'essieu de raccordement auquel l'élément de raccordement est raccordé.

6. Système de fixation de nasse d'aquaculture selon l'une quelconque des revendications 2 à 5, dans lequel la surface d'engagement est configurée pour permettre au doigt inférieur de tourner au moins partiellement autour de l'essieu de raccordement sélectionné.

7. Système de fixation de nasse d'aquaculture selon l'une quelconque des revendications 2 à 6, dans lequel la pluralité d'essieux de raccordement sont agencés de sorte qu'au moins l'un s'étende le long d'un axe x et qu'au moins l'un s'étende le long d'un axe y moyennant quoi le doigt inférieur peut être fixé à la zone de raccordement par pince dans deux différentes orientations.

8. Système de fixation de nasse d'aquaculture selon l'une quelconque des revendications 1 à 7, dans lequel la pluralité d'essieux de raccordement e t l'extrémité inférieure de l'élément de raccordement sont conformés de sorte que l'élément de raccordement soit mobile entre ladite position de fonctionnement dans laquelle l'extrémité supérieure est positionnée vers le haut de la nasse et loin de celle-ci permettant à l'élément de raccordement d'être raccordé à la ligne de support ou à une autre partie et une position de repos dans laquelle l'extrémité supérieure est positionnée de façon adjacente à la nasse ou en contact avec celle-ci.

9. Système de fixation de nasse d'aquaculture selon la revendication 8, dans lequel il existe un engagement par friction entre l'extrémité inférieure et l'essieu de raccordement sélectionné de sorte qu'une sollicitation doive être surmontée afin de déplacer l'élément de raccordement entre les positions de fonctionnement et de repos.

10. Système de fixation de nasse d'aquaculture selon l'une quelconque des revendications 1 à 9, dans lequel l'extrémité inférieure comporte deux doigts inférieurs.

11. Système de fixation de nasse d'aquaculture selon l'une quelconque des revendications 1 à 10, dans lequel l'extrémité supérieure comporte un crochet supérieur conformé de manière à saisir la ligne de support ou une autre partie de façon à empêcher le glissement du crochet supérieur le long de la ligne de support ou d'une autre partie.

12. Système de fixation de nasse d'aquaculture selon l'une quelconque des revendications 1 à 11, dans lequel la zone de raccordement est située sur un axe central d'une partie supérieure de la nasse.

13. Système de fixation de nasse d'aquaculture selon l'une quelconque des revendications 1 à 12, comportant deux zones de raccordement et deux éléments de raccordement agencés pour permettre à la nasse d'être raccordée le long d'une seule ligne de support ou entre des lignes de support adjacentes.

14. Nasse d'aquaculture comportant un système de fixation de nasse d'aquaculture selon l'une quelconque des revendications 1 à 13.
